(19) Europäisches Patentamt

European Patent Office

Office européen des brevets

(11) **EP 4 107 550 B1**

(12) **EUROPEAN PATENT SPECIFICATION**

(45) Date of publication and mention
of the grant of the patent:
**06.08.2025 Bulletin 2025/32**

(21) Application number: **21705615.9**

(22) Date of filing: **10.02.2021**

(51) International Patent Classification (IPC):
*G01V 1/28* *(2006.01)*      *G01V 1/36* *(2006.01)*

(52) Cooperative Patent Classification (CPC):
**G01V 1/28; G01V 1/282; G01V 1/36;**
G01V 2210/632

(86) International application number:
**PCT/IB2021/051071**

(87) International publication number:
**WO 2021/165789 (26.08.2021 Gazette 2021/34)**

(54) **SYSTEM AND METHOD FOR SEISMIC IMAGING WITH AMPLITUDE RECOVERY**

SYSTEM UND VERFAHREN ZUR SEISMISCHEN BILDGEBUNG MIT
AMPLITUDENWIEDERHERSTELLUNG

SYSTÈME ET PROCÉDÉ D'IMAGERIE SISMIQUE AVEC RÉCUPÉRATION D'AMPLITUDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.02.2020 US 202016795374**

(43) Date of publication of application:
**28.12.2022 Bulletin 2022/52**

(73) Proprietor: **Chevron U.S.A. Inc.
San Ramon, CA 94583 (US)**

(72) Inventors:
• **SUN, Yonghe
  San Ramon, California 94583 (US)**
• **NEALON, Jeffrey William
  San Ramon, California 94583 (US)**
• **DAVENPORT, James Michael
  San Ramon, California 94583 (US)**
• **TAN, Zhemin
  San Ramon, California 94583 (US)**
• **CHURCH, Brian J.
  San Ramon, California 94583 (US)**

(74) Representative: **Haseltine Lake Kempner LLP
One Portwall Square
Portwall Lane
Bristol BS1 6BH (GB)**

(56) References cited:
WO-A1-2019/241062      US-A- 5 623 928
US-A1- 2018 275 302      US-A1- 2019 187 312

# EP 4 107 550 B1

**Description**

TECHNICAL FIELD

The disclosed embodiments relate generally to techniques for seismic imaging of subsurface reservoirs and, in particular, to a method of seismic imaging including amplitude recovery based on modeling. Reference may be made to US 2018/275302 A1 which relates to amplitude compensation of reverse time migration (RTM) gathers for AVO/AVA analysis. The method includes acquiring a set of seismic traces based on seismic data obtained by a seismic receiver, responsive to seismic energy reflected from a subsurface geology. Additional steps include performing reverse time migration on the seismic traces using a velocity model that represents velocity of the seismic energy propagating through the seismic medium. The migrated gathers have an amplitude based at least in part on the migration, which can be corrected by computing synthetic seismograms to provide compensated gathers. Reference may be made to US 5 623 928 A which relates to a method and apparatus for coherent image formation. The method and apparatus are provided for imaging an object using a transducer array for transmitting one or more beams that are steered and/or translated to transmit scan lines for multiple excitation events so as to scan a field of view of the object, for sensing received signals reflected from the object after each excitation event on one or more receive beams on receive scan lines, and for transducing those sensed received signals into corresponding electrical signals. Reference may be made to US 2019/187312 A1 which relates to processes and systems for generating a high-resolution velocity model of a subterranean formation using iterative full-waveform inversion. The processes and systems generate a high-resolution velocity model of a subterranean formation from recorded seismic data gathers obtained in a marine seismic survey of the subterranean formation. A velocity model is computed by iterative FWI using reflections, resolving the velocity field of deep subterranean targets without requiring ultralong offsets. The processes and systems use an impedance sensitivity kernel to characterize reflections in a modeled wavefield, and then use the reflections to compute a velocity sensitivity kernel that is used to produce low-wavenumber updates to the velocity model. Reference may be made to WO 2019/241062 A1 which relates to a seismic data interpretation system. The method can include accessing a trained machine model as trained to analyze digital seismic data of a region with respect to a structural feature of a geologic region; analyzing at least a portion of the digital seismic data using the trained machine model to generate results; and outputting the results as indicators of spatial locations of the structural feature of the geologic region.

BACKGROUND

Seismic exploration involves surveying subterranean geological media for hydrocarbon deposits. A survey typically involves deploying seismic sources and seismic sensors at accessible locations. The sources generate seismic waves, which propagate into the geological medium creating pressure changes and vibrations. Variations in physical properties of the geological medium give rise to changes in certain properties of the seismic waves, such as their direction of propagation and other properties.

Portions of the seismic waves reach the seismic sensors. Some seismic sensors are sensitive to pressure changes (e.g., hydrophones), others (e.g., geophones) to particle motion and industrial surveys may deploy one type of sensor or both. In response to the detected seismic waves, the sensors generate corresponding electrical signals, known as traces, and record them in storage media as seismic data. Seismic data will include a plurality of "shots" (individual instances of the seismic source being activated), each of which is associated with a plurality of traces recorded at the plurality of sensors.

Seismic data is processed to create seismic images that can be interpreted to identify subsurface geologic features including hydrocarbon deposits. Analysis of seismic amplitude-versus-angle (AVA) or amplitude-versus-offset (AVO) is a primary technique for deriving rock properties and hydrocarbon indicators for oil and gas exploration. However, available seismic imaging and processing techniques, such as Kirchhoff migration (KMIG), reverse-time migration (RTM), F-K filtering, and Radon-transform-based multiple attenuation, often are not amplitude compliant by themselves. Acquisition geometry imprints, overburden wave propagation effects, and frequency-dependent processing algorithms result in amplitude distortions. Such distortions interfere with identification of fluid content and mapping of amplitude anomalies. In some migration implementations of KMIG and RTM, attempts are made to compensate acquisition fold and geometric spreading effects, but such compensation is only partial and qualitative. Representative prior art relevant to this work include Rickett (2003), Albertin (2010), and He et al (2018), among others. Some of them propose using synthetic data to model subsurface illumination and use the migration of synthetic data to determine amplitude compensation of field data for AVA or AVO fidelity. Quantitative amplitude compensation for post-migration processing such as Radon multiple attenuation is a less well-mentioned topic.

The ability to define the location of rock and fluid property changes in the subsurface is crucial to our ability to make the most appropriate choices for purchasing materials, operating safely, and successfully completing projects. Project cost is dependent upon accurate prediction of the position of physical boundaries within the Earth. Decisions include, but are not limited to, budgetary planning, obtaining mineral and lease rights, signing well commitments, permitting rig locations, designing well paths and drilling strategy, preventing issues of subsurface integrity by planning proper casing and cementation strategies, and selecting and purchasing appropriate completion and production equipment.

There exists a need for amplitude recovery in seismic images that will allow better seismic interpretation of potential hydrocarbon reservoirs.

SUMMARY

The present invention is defined by the appended independent claims to which reference should now be made. Specific embodiments are defined in the dependent claims.

To address the aforementioned problems, a computer-implemented method of seismic imaging is provided.

In another aspect of the present invention, to address the aforementioned problems, some embodiments provide a non-transitory computer readable storage medium storing one or more programs. The one or more programs comprise instructions, which when executed by a computer system with one or more processors and memory, cause the computer system to perform any of the methods provided herein.

In yet another aspect of the present invention, to address the aforementioned problems, some embodiments provide a computer system. The computer system includes one or more processors, memory, and one or more programs. The one or more programs are stored in memory and configured to be executed by the one or more processors. The one or more programs include an operating system and instructions that when executed by the one or more processors cause the computer system to perform any of the methods provided herein.

BRIEF DESCRIPTION OF THE DRAWINGS

Figure 1 illustrates a flowchart of a method of seismic imaging with amplitude recovery;

Figure 2 is an example of a step of the method of seismic imaging;

Figure 3 is an example of a result of the method of seismic imaging;

Figure 4 is an example of a result of the method of seismic imaging;

Figure 5 illustrates a flowchart of a method of seismic imaging with amplitude recovery;

Figure 6 is an example of a result of the method of seismic imaging; and

Figure 7 is a block diagram illustrating a seismic imaging system.

Like reference numerals refer to corresponding parts throughout the drawings.

DETAILED DESCRIPTION OF EMBODIMENTS

Described below are methods, systems, and computer readable storage media that provide a manner of seismic imaging. These embodiments are designed to be of particular use for seismic imaging of subsurface volumes in geologically complex areas.

Reference will now be made in detail to various embodiments, examples of which are illustrated in the accompanying drawings. In the following detailed description, numerous specific details are set forth in order to provide a thorough understanding of the present disclosure and the embodiments described herein. However, embodiments described herein may be practiced without these specific details, as specified in the appended claims. In other instances, well-known methods, procedures, components, and mechanical apparatus have not been described in detail so as not to unnecessarily obscure aspects of the embodiments.

Seismic imaging of the subsurface is used to identify potential hydrocarbon reservoirs. Advantageously, those of ordinary skill in the art will appreciate, for example, that the embodiments provided herein may be utilized to generate a more accurate digital seismic image (i.e., the corrected digital seismic image). The more accurate digital seismic image may improve hydrocarbon exploration and improve hydrocarbon production. The more accurate digital seismic image may provide details of the subsurface that were illustrated poorly or not at all in traditional seismic images. Moreover, the more accurate digital seismic image may better delineate where different features begin, end, or any combination thereof. As one example, the more accurate digital seismic image may illustrate faults and/or salt flanks more accurately. As another example, assume that the more accurate digital seismic image indicates the presence of a hydrocarbon deposit. The more accurate digital seismic image may delineate more accurately the bounds of the hydrocarbon deposit so that the hydrocarbon deposit may be produced.

Those of ordinary skill in the art will appreciate, for example, that the more accurate digital seismic image may be utilized in hydrocarbon exploration and hydrocarbon production for decision making. For example, the more accurate digital seismic image may be utilized to pick a location for a wellbore. Those of ordinary skill in the art will appreciate that decisions about (a) where to drill one or more wellbores to produce the hydrocarbon deposit, (b) how many wellbores to drill to produce the hydrocarbon deposit, etc. may be made based on the more accurate digital seismic image. The more accurate digital seismic image may even be utilized to select the trajectory of each wellbore to be drilled. Moreover, if the delineation indicates a large hydrocarbon deposit, then a higher number of wellbore locations may be selected and that higher number of wellbores may be drilled, as compared to delineation indicating a smaller hydrocarbon deposit.

Those of ordinary skill in the art will appreciate, for example, that the more accurate digital seismic image may be utilized in hydrocarbon exploration and hydrocarbon production for control. For example, the more accurate digital seismic image may be utilized to steer a tool (e.g., drilling tool) to drill a wellbore. A drilling tool may be steered to drill one or more wellbores to produce the hydrocarbon deposit. Steering the tool may include drilling around or avoiding certain subsurface features (e.g., faults, salt diapirs, shale diapirs, shale ridges, pockmarks, buried channels, gas chimneys, shallow gas pockets, and slumps), drilling through certain subsurface features (e.g., hydrocarbon deposit), or any combination thereof depending on the desired outcome. As another example, the more accurate digital seismic image may be utilized for controlling flow of fluids injected into or received from the subsurface, the wellbore, or any combination thereof. As another example, the more accurate digital seismic image may be utilized for controlling flow of fluids injected into or received from at least one hydrocarbon producing zone of the subsurface. Chokes or well control devices, positioned on the surface or downhole, may be used to control the flow of fluid into and out. For example, certain subsurface features in the more accurate digital seismic image may prompt activation, deactivation, modification, or any combination thereof of the chokes or well control devices so as control the flow of fluid. Thus, the more accurate digital seismic image may be utilized to control injection rates, production rates, or any combination thereof.

Those of ordinary skill in the art will appreciate, for example, that the more accurate digital seismic image may be utilized to select completions, components, fluids, etc. for a wellbore. A variety of casing, tubing, packers, heaters, sand screens, gravel packs, items for fines migration, etc. may be selected for each wellbore to be drilled based on the more accurate digital seismic image. Furthermore, one or more recovery techniques to produce the hydrocarbon deposit may be selected based on the more accurate digital seismic image.

In short, those of ordinary skill in the art will appreciate that there are many decisions (e.g., in the context of (a) steering decisions, (b) landing decisions, (c) completion decisions, (d) engineering control systems and reservoir monitoring in the following but not limited to: Tow Streamer, Ocean Bottom Sensor, VSP, DASVSP, and imaging with both primaries and free surface multiple, etc.) to make in the hydrocarbon industry and making proper decisions based on more accurate digital seismic images should improve the likelihood of safe and reliable operations. For simplicity, the many possibilities, including wellbore location, component selection for the wellbore, recovery technique selection, controlling flow of fluid, etc., may be collectively referred to as managing a subsurface reservoir.

The present invention includes embodiments of a method and system for Modeling-Based Amplitude Recovery (MBAR). MBAR is a processing framework that corrects for amplitude distortions by one or a combination of several amplitude-distorting processing steps. It uses a synthetic dataset purposely created to mimic field data amplitude characteristics desired to be preserved despite amplitude distortions caused by one or more processing steps. The identical processing is applied to both the field and synthetic datasets. The amplitude distortions measured in the processed synthetic dataset are used to correct those in the processed field dataset. The distinction of MBAR from prior art for amplitude-conscious processing is in the design of synthetics for each type of processing, in the manner of how the synthetic data is used to achieve amplitude compliance, in applications to processing methods that are amplitude-distorting but widely employed by the seismic processing industry, and as alternative to existing approaches to some imaging tasks.

MBAR can be applied to many amplitude-linear processing algorithms and linear workflow combinations of amplitude-linear algorithms, such as KMIG, RTM, Radon, FX filtering, and FK filtering.

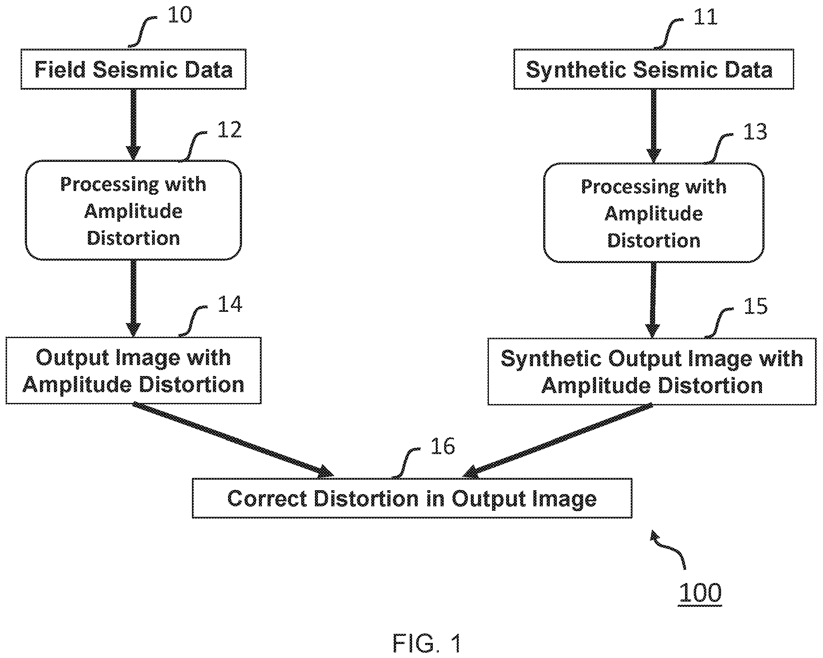

Figure 1 illustrates a flowchart of a method 100 for seismic imaging including amplitude recovery. At operation 10, a field seismic dataset is received. As previously described, the field seismic dataset includes a plurality of traces recorded at a plurality of seismic sensors for each of a plurality of seismic shots. As is well-known to those of skill in the art, the field seismic data will include seismic attributes that vary with offset or angle. By the way of example, these seismic attributes may be amplitudes that vary with offset or angle (AVO or AVA). For simplicity, this amplitude variation will be referred to as AVA hereafter but it should be understood that any seismic attribute that varies with offset or angle is within the scope of the methods and systems described herein. The AVA is important information for analyzing fluid content and lithology of the subsurface. At operation 11, a synthetic seismic dataset that is designed to contain signals with known (e.g. zero) AVA effects but otherwise mimicking the desired attributes of field dataset is received.

The synthetic seismic dataset will be designed to experience similar amplitude distortions or processing artifacts that replicate AVA flaws induced by the acquisition or processing of field seismic dataset. For example, the synthetic seismic data will be created with an earth model that has the same dip content as the image from the field seismic data, so will replicate or contain the same overburden wave-propagation distortions. As previously explained, the synthetic seismic dataset for one type of application of MBAR was generated using the same acquisition parameters (i.e., same source and receiver locations) as the field seismic data so it will have the same acquisition footprint. The synthetic dataset does not need to replicate all characters of the field data. It only needs to be sufficient for assessing the degree of processing affliction to those characters. In particular, the synthetic seismic dataset does not need to simulate the (same) AVA due to the fluid or lithology changes in the subsurface. An AVA-free synthetic data may be generated, for example, by Born modeling with density perturbations or simple convolution of a wavelet with a reflectivity model. It is convenient, but not required, to use synthetic data with zero AVA. The key is that the AVA of synthetic is known.

At operation 12, the field seismic data is processed using one or more amplitude-linear processing steps, some or all of which are known to cause amplitude distortion. This results in an output image with amplitude distortion 14. The same processing is applied to the synthetic seismic dataset at operation 13 resulting in synthetic output image with amplitude distortion 15. The amplitude distortion in both the field data output image and the synthetic data output image is due to the processing and will be the same in both cases. For the synthetic case, the amplitudes with and without distortion are known and thus can be used to quantify distortion for correcting field data. Without losing generality, data acquisition can be considered a type of processing (e.g., converting ground motion into electronic signals) and acquisition footprints are types of amplitude distortion by processing.

Operation 16 corrects the amplitude distortion from the field data image to produce an image with AVA that ideally is free of amplitude distortions. This may be accomplished by some version of an inverse process (e.g., division or deconvolution):

$$\frac{\text{Field data image with AVA and amplitude distortion}}{\text{Synthetic data image with amplitude distortion}} = \text{Image with AVA}$$

Method 100 does not specify the type of amplitude-linear processing that is applied to both field data and synthetic data. Those of skill in the art will realize that there are many processing options that can be used singly or in combination, including, by way of example and not limitation, anti-aliasing, migration, and post-migration data conditioning (PMDC).

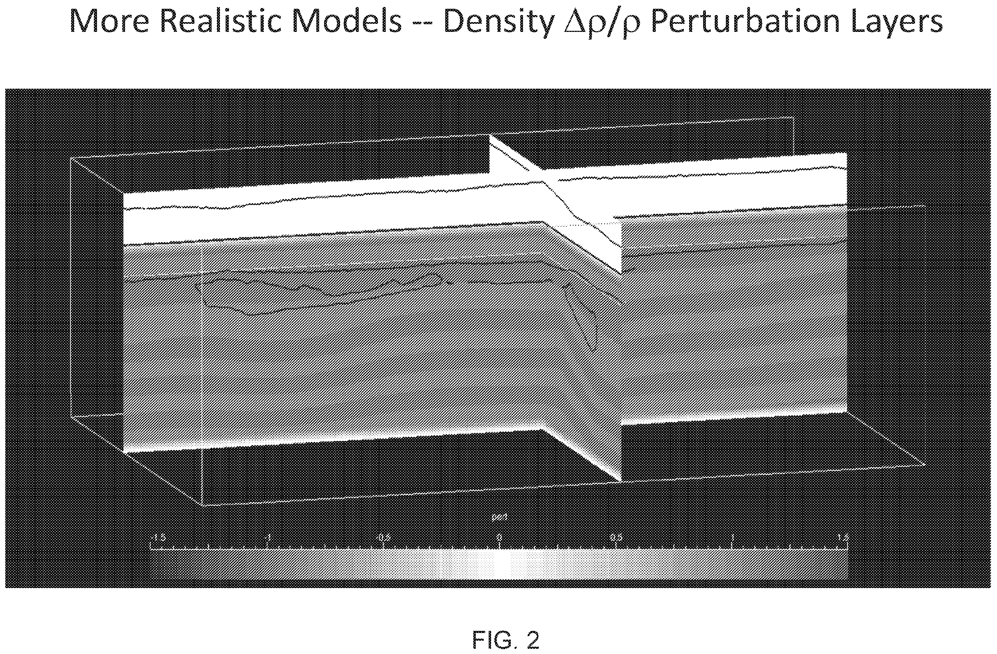

In an embodiment, method 100 may be used to mitigate amplitude distortion in migration. For migration, amplitude distortion may occur due to acquisition fold and poor illumination of the subsurface (overburden wave propagation effects). In this embodiment, the synthetic seismic dataset is generated using an earth model with reflectivity that mimic the earth's reflectivity in some way, such as in dip content in the area of interest and uses finite-difference for modeling to compute the amplitude/illumination corrections, as can be found in existing publications . In an embodiment, the earth model may be designed with a set of non-intersecting layers with density perturbation to represent the dip content of the earth model for finite-difference modeling, as shown in Figure 2. While this is similar to conventional approaches, the method of the present invention goes beyond traditional approaches by computing the image responses of the layer boundaries individually, or in near-isolation, free from interference by the image artifacts of other boundaries. After regularization and denoising, it is then possible to extract the position, phase, and amplitude from the bandlimited synthetic image of each modeled layer boundary. The deviations of position, phase, and amplitude from their ideal values predicted from known model are used to correct the distortions synthetic image to their ideal values as expected from the known layer boundaries in the model. While the synthetic data may be modeled with frequencies much lower than that of field data for computational efficiency, the extracted position, phase, and amplitude are considered frequency-independent and are then used to correct distortions in the field data images by depth-shift, phase rotation, and amplitude scaling. The correction data may be computed on a coarse grid and applied in operation 16 of method 100 in a windowed fashion or in a continuous fashion by interpolation. These corrections can also be implemented by division (to correct for amplitudes), deconvolution (to correct for amplitude and phase spectra), or other manners of inversion. The responses used to deconvolve field data image may have the same bandwidth as the field data. Such responses can be computed, for example, by windowing the synthetic image with that bandwidth or by composition using extracted depth position, phase, and amplitude information.

Furthermore, to avoid aliasing in discretizing the layers and to avoid layering-boundary stair-casing effects that impacts the accuracy of finite-difference modeling and prevent interference of adjacent layer boundaries, especially in low-frequency modeling for computational efficiency, instead of a single model with fine layering, this embodiment may use multiple models with thick layers and interlaced boundary positions. An implicit contour function F(x,y,z) with spatial coordinates (x,y,z) can be built with the layer boundaries or picked horizons at specified contours of F(x,y,z). Layer perturbation with alternating constant properties (such as constant-density perturbation ratio $\Delta\rho/\rho$) can be created with a function like

$$\Delta\rho/\rho = A*\tanh(S*\sin(\pi*(F-B)/D) * \{\ 1 - (2/\pi)*a\cos[\cos(\pi*(F-B)/D)]\ \}$$

and that with constant-gradient layers can be created by a function like

$$\Delta\rho/\rho = A*\tanh(S*\sin(\pi*(F-B)/D) * \cos(\pi*(F-B)/D)$$

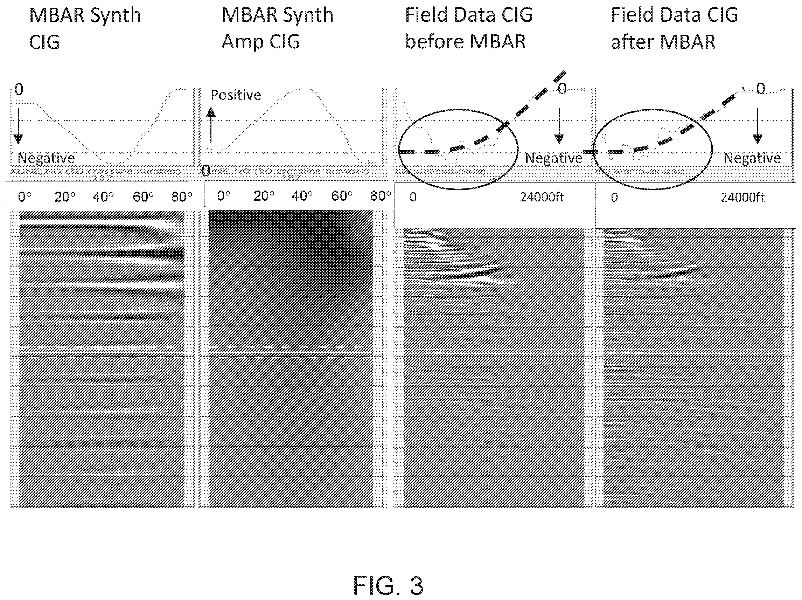

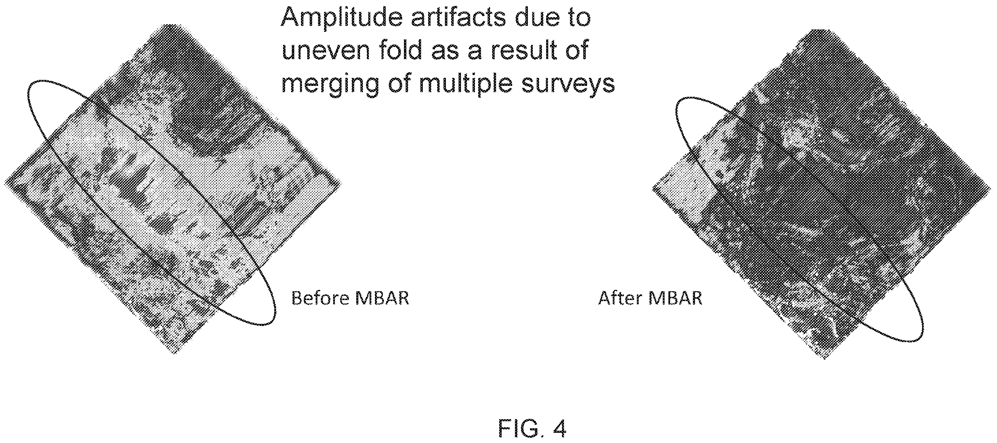

where A controls the perturbation strength, D controls the layer thickness, B controls starting position of the layering, and S controls the sharpness and stair-casing at the layer boundaries. Layering with alternating constant $\Delta\rho/\rho$ perturbations produce reflectivities with alternating polarities, while perturbations with constant-gradient perturbations produce reflectivities with the same polarities. The AVA-free synthetic seismic data generated using this method can then be migrated with the same migration algorithm as the field seismic data and the two migrated images can be used in operation 16 of method 100 to create the image with AVA with overburden and acquisition distortions mitigated. Figure 3 and Figure 4 demonstrate examples of this embodiment. In Figure 3, the leftmost panel 1 shows a synthetic image angle-gather. Plotted at the top is the AVA curve of the event sandwiched by two white dashed lines across the panel. The amplitude shows strong negative peak near 50°. This similarly observed in the AVO curve plotted on field data offset-gather (panel 3) with a strong negative peak near offset 12000 feet (see oval). The amplitude strength of the synthetic events in panel 1 is extracted and interpolated to create a smoothly varying amplitude profile shown in panel 2 and is the used to scale (i.e., to remove amplitude distortion due to acquisition and imaging in) the field data gather in panel 3 to create the MBAR calibrated AVO gather in panel 4 with the amplitude peak now moderated into a relatively flat AVO as one would expect at near offset (see oval).Figure 4 shows another result of method 100. Here, two different surveys have been merged resulting in amplitude artifacts due to uneven fold (number of data traces). As shown in the left panel, the amplitude map of the relatively flat ocean bottom changes rapidly with position. After MBAR, the impact of the acquisition fold artifacts is largely removed, and the amplitude map as shown on the right is much more uniform. Balancing the fold of the input field data before migration is a common industry practice to attenuate acquisition footprints. However, such balancing alone is not quantitively complete because it does not account for the interaction of fold and overburden wave propagation. With fold balancing applied to both field and synthetic data, MBAR can correct the residual fold effects due to such interactions.

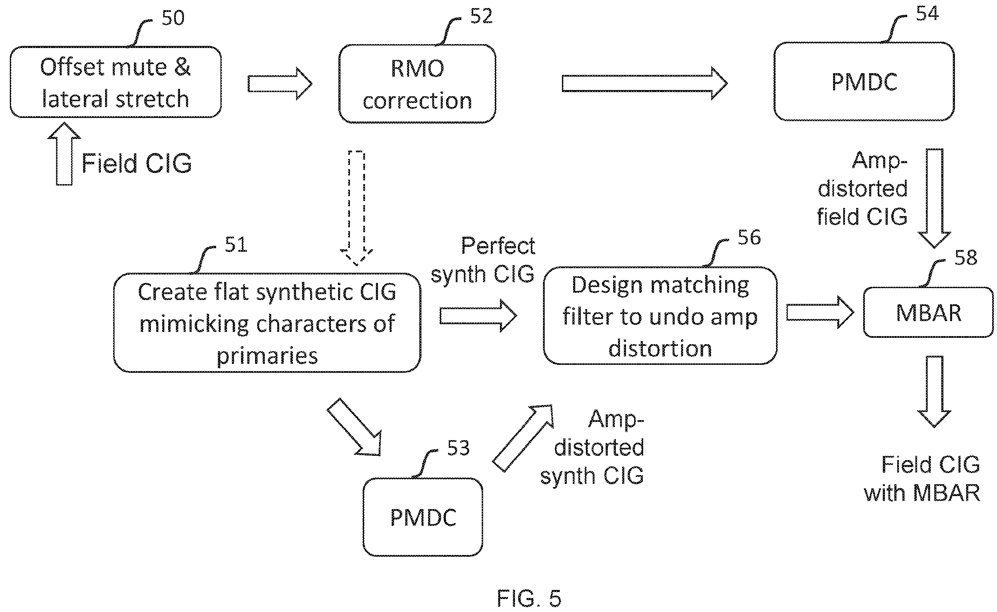

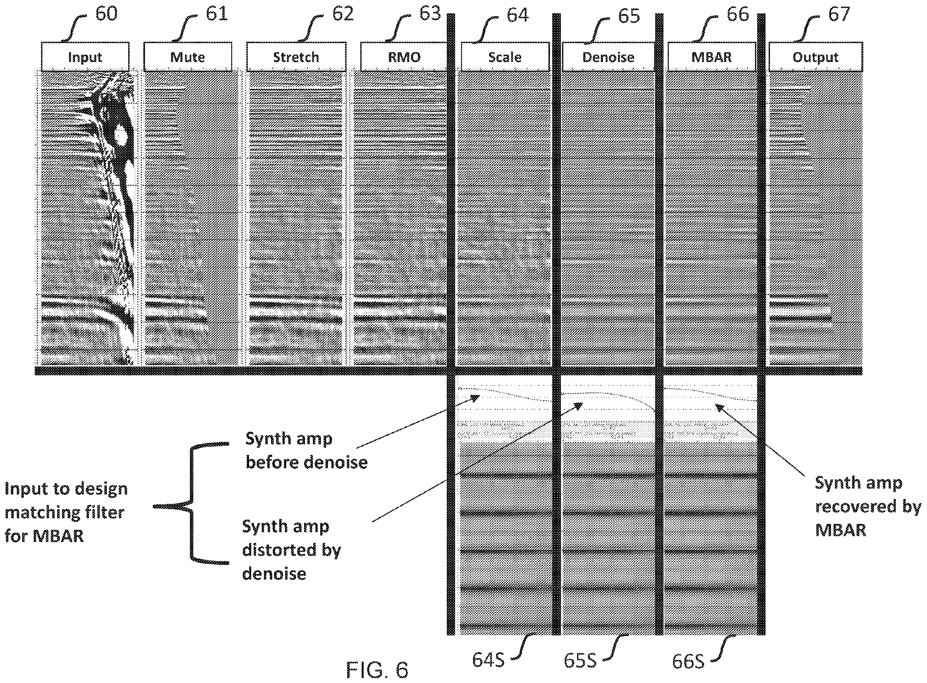

A workflow explaining an embodiment that uses method 100 for post-migration data conditioning (PMDC) is in Figure 5. The common image gather (CIG) of the field data is processed using an offset mute and lateral stretch 50. The stretch is to push edge of the mute out of the domain and thus to avoid amplitude-edge artifacts that plague many processing algorithms. It is then subjected to residual moveout (RMO) correction 52. The primary events with zero residual moveout versus offset are considered signal, multiples with nonzero residual moveout are noise. This provides information needed to create flat synthetic CIG mimicking characters of primaries 51. The synthetic data gather is created using the windowed spectrum of the field data imaging gathers. Each synthetic gather consists of a set of events with zero residual moveout. The events are equi-spaced in depth or time. The wavelet for each event at each offset uses a wavelet that has the same wavelet spectrum as field data. Because the synthetic events do not have residual moveout, just like primaries in the field data are assumed to behave, any damage to the amplitude spectrum of the synthetic data can be used to correct the amplitude spectrum of primaries in field data. The synthetic CIGs can have any additional PMDC 53 applied to generate amplitude-distorted synthetic CIGs. Comparing the perfect synthetic CIGs and the amplitude-distorted synthetic CIGs allows the designing of a matching filter to undo the amplitude distortion 56. The same additional PMDC 54 is applied to the RMO-corrected field seismic data. MBAR 58 uses the matching filter to correct the amplitude-distorted field CIG to generate the field CIGs with amplitude recovery. Figure 6 demonstrates an example of this embodiment. An input field CIG 60 is muted 61, horizontally stretched 62, and residual moveout corrected 63. Based on the residual moveout corrected 63, the synthetic CIG 64S can be generated using the scaled CIG 64. Scaling is desirable for some processing steps like denoise. The scaler should be a gently varying spatial function and scaling should be undone after PMDC and MBAR. The PMDC step of denoise is applied to both the field and synthetic CIGs to generate the denoised CIG 65 and the denoised synthetic CIG 65S. Synthetic CIG 64S shows an amplitude curve along one of the events (in between the dashed lines) at the top showing its behavior with increasing angle. After denoise, the amplitude curve for the denoised synthetic CIG 65S has been distorted. This synthetic data before denoising (without distortion) and after denoising (with distortion) allows the design of a matching filter that will be used by MBAR which will generate the MBAR CIG 66 and the synthetic MBAR CIG 66S. Comparison of the amplitude curves at top of CIG 66S (corrected for distortion) with CIG 64S (without distortion) confirms that MBAR has corrected the amplitude distortions observed in CIG 65S (with distortion). The distortions in field data CIG 65 are similarly corrected in CIG 66. Ultimately, the output CIG 67, after undoing stretch 62 and scaling 64 to facilitate denoising 65, has the amplitude distortion removed but has all of the benefits of the processing steps used.

In a similar embodiment, method 100 may be used for anti-aliasing. Oftentimes, seismic data are acquired with sparse source and receiver distributions (collectively called acquisition parameters). The reasons for sparsity vary, such acquisition cost and obstacles in the field. Sparsity can lead to spatial aliasing of images. In this case, method 100 calls for synthetic data generated using an earth model with reflectivity that mimic the earth's reflectivity in some way, such as in dip content in the area of interest. In this embodiment, it is necessary to create two synthetic datasets. For one of the synthetic datasets, the field coordinates of the actual sources and receivers are used. Migration of this synthetic dataset would give a synthetic image with aliasing similar to that of the field data. For the other synthetic dataset, denser sources and receivers would be used. Migration of the second synthetic data would give an unaliased (or at least less aliased) image. Using these two sets of synthetic images, a spatially non-stationary matching filter can be designed that could approximate the unaliased synthetic image given the aliased synthetic image. The matching filter can be applied to the aliased field data image to de-alias the field data image. This is a solution to an existing problem that is sometimes addressed by multi-dimensional interpolation. However, unlike existing approaches, the MBAR approach does not require regularity of the input source and receiver distribution.

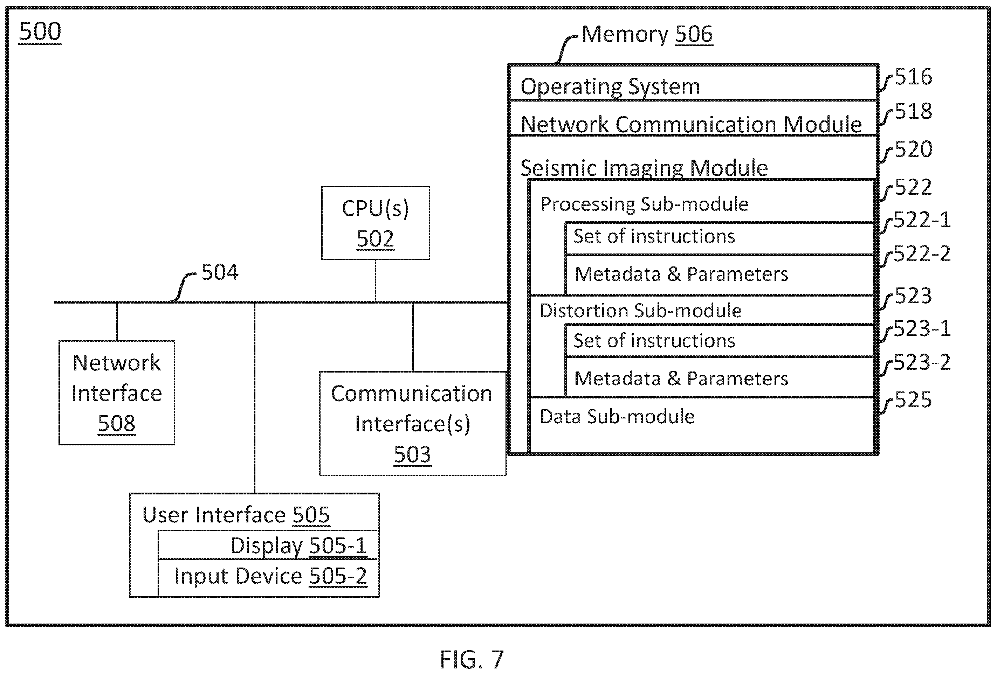

Figure 7 is a block diagram illustrating a seismic imaging system 500, in accordance with some embodiments. While certain specific features are illustrated, those skilled in the art will appreciate from the present disclosure that various other features have not been illustrated for the sake of brevity and so as not to obscure more pertinent aspects of the embodiments disclosed herein.

To that end, the seismic imaging system 500 includes one or more processing units (CPUs) 502, one or more network interfaces 508 and/or other communications interfaces 503, memory 506, and one or more communication buses 504 for interconnecting these and various other components. The seismic imaging system 500 also includes a user interface 505 (e.g., a display 505-1 and an input device 505-2). The communication buses 504 may include circuitry (sometimes called a chipset) that interconnects and controls communications between system components. Memory 506 includes high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. Memory 506 may optionally include one or more storage devices remotely located from the CPUs 502. Memory 506, including the non-volatile and volatile memory devices within memory 506, comprises a non-transitory computer readable storage medium and may store seismic data, velocity models, seismic images, and/or geologic structure information.

In some embodiments, memory 506 or the non-transitory computer readable storage medium of memory 506 stores the following programs, modules and data structures, or a subset thereof including an operating system 516, a network communication module 518, and a seismic imaging module 520.

The operating system 516 includes procedures for handling various basic system services and for performing hardware dependent tasks.

The network communication module 518 facilitates communication with other devices via the communication network interfaces 508 (wired or wireless) and one or more communication networks, such as the Internet, other wide area networks, local area networks, metropolitan area networks, and so on.

In some embodiments, the seismic imaging module 520 executes the operations of method 100. Seismic imaging module 520 may include data sub-module 525, which handles the seismic datasets and any earth models. The seismic data and earth models are supplied by data sub-module 525 to other sub-modules.

Processing sub-module 522 contains a set of instructions 522-1 and accepts metadata and parameters 522-2 that will enable it to execute operations 12 and 13 of method 100. The distortion sub-module 523 contains a set of instructions 523-1 and accepts metadata and parameters 523-2 that will enable it to contribute to operation 16 of method 100. Although specific operations have been identified for the sub-modules discussed herein, this is not meant to be limiting. Each sub-module may be configured to execute operations identified as being a part of other sub-modules, and may contain other instructions, metadata, and parameters that allow it to execute other operations of use in processing seismic data and generate the seismic image. For example, any of the sub-modules may optionally be able to generate a display that would be sent to and shown on the user interface display 505-1. In addition, any of the seismic data or processed seismic data products may be transmitted via the communication interface(s) 503 or the network interface 508 and may be stored in memory 506.

Method 100 is, optionally, governed by instructions that are stored in computer memory or a non-transitory computer readable storage medium (e.g., memory 506 in Figure 7) and are executed by one or more processors (e.g., processors 502) of one or more computer systems. The computer readable storage medium may include a magnetic or optical disk storage device, solid state storage devices such as flash memory, or other non-volatile memory device or devices. The computer readable instructions stored on the computer readable storage medium may include one or more of: source code, assembly language code, object code, or another instruction format that is interpreted by one or more processors. In various embodiments, some operations in each method may be combined and/or the order of some operations may be changed from the order shown in the figures. For ease of explanation, method 100 is described as being performed by a computer system, although in some embodiments, various operations of method 100 are distributed across separate computer systems.

While particular embodiments are described above, it will be understood it is not intended to limit the invention to these particular embodiments. On the contrary, the disclosure includes alternatives and modifications that are within the scope of the appended claims. Numerous specific details are set forth in order to provide a thorough understanding of the subject matter presented herein. But it will be apparent to one of ordinary skill in the art that the subject matter may be practiced without these specific details. In other instances, well-known methods, procedures, components, and circuits have not been described in detail so as not to unnecessarily obscure aspects of the embodiments.

The terminology used in the description of the invention herein is for the purpose of describing particular embodiments only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, operations, elements, and/or components, but do not preclude the presence or addition of one or more other features, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Although some of the various drawings illustrate a number of logical stages in a particular order, stages that are not order dependent may be reordered and other stages may be combined or broken out. While some reordering or other groupings are specifically mentioned, others will be obvious to those of ordinary skill in the art and so do not present an exhaustive list of alternatives. Moreover, it should be recognized that the stages could be implemented in hardware, firmware, software or any combination thereof.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A computer-implemented method (100) of seismic imaging, comprising:

   a. receiving (10, 11), at one or more computer processors, a field seismic dataset representative of a subsurface volume of interest and a synthetic seismic dataset wherein the synthetic seismic dataset is generated with no or known attribute variation with angle or other spatial coordinates, wherein the synthetic seismic dataset includes synthetic seismic data generated by forward modeling through an earth model having layer boundaries;
   b. applying (12, 13), via the one or more computer processors, seismic processing to the field seismic dataset and the synthetic seismic dataset to generate a processed field seismic dataset and a processed synthetic seismic dataset wherein the processed field seismic dataset and the processed synthetic seismic dataset each comprise output images and contain attribute distortion due to the seismic processing, wherein the processed synthetic seismic dataset comprises synthetic image responses of individual layer boundaries of the earth model computed individually, free from interference by image artifacts of other layer boundaries;
   c. extracting, at the one or more computer processors, the position, phase and amplitude from the synthetic image response of each of the individual layer boundaries; and
   d. correcting (16), via the one or more computer processors, the attribute distortion in the field seismic dataset based on the distortion assessed from the processed synthetic seismic dataset using deviations in the extracted position, phase and amplitude in the synthetic image responses and the expected position, phase and amplitude from the earth model to generate a corrected processed field dataset,

   and wherein:
   the field seismic dataset includes a plurality of traces recorded at a plurality of seismic sensors for each of a plurality of seismic shots.

2. The method (100) of claim 1 wherein the seismic processing is migration.

3. The method (100) of claim 1 wherein the seismic processing is post-migration data conditioning.

4. The method (100) of claim 2 wherein the earth model is designed with a set of non-intersecting layers with density perturbation to represent dip content of the earth model and with an acquisition geometry representative of the field seismic data.

5. The method (100) of claim 4 wherein the forward modeling is finite-difference modeling.

6. A computer system (500), comprising:

   one or more processors (502); and
   memory (506);
   wherein one or more programs are stored in the memory (506) and configured to be executed by the one or more processors (502), the one or more programs including instructions that when executed by the one or more processors (502) cause the system (500) to carry out the method of any of claims 1 to 5.

7. One or more computer programs comprising instructions, which when executed by an electronic device (500) with one or more processors (502) and memory (506), cause the device (500) to carry out the method of any of claims 1 to 5.

8. A non-transitory computer readable data storage medium (506) having stored thereon the one or more computer programs of claim 7.

**Patentansprüche**

1. Computerimplementiertes Verfahren (100) zur seismischen Bildgebung, das Folgendes umfasst:

   a. Empfangen (10, 11), an einem oder mehreren Computerprozessoren, eines seismischen Felddatensatzes, der ein unterirdisches Volumen von Interesse repräsentiert, und eines synthetischen seismischen Datensatzes, wobei der synthetische seismische Datensatz ohne irgendwelche oder bekannte Attributvariation mit Winkel oder anderen räumlichen Koordinaten erzeugt wird, wobei der synthetische seismische Datensatz synthetische seismische Daten beinhaltet, die durch Vorwärtsmodellierung durch ein Erdmodell mit Schichtgrenzen erzeugt werden;
   b. Anwenden (12, 13), über den einen oder die mehreren Computerprozessoren, einer seismischen Verarbeitung auf den seismischen Felddatensatz und den synthetischen seismischen Datensatz, um einen verarbeiteten seismischen Felddatensatz und einen verarbeiteten synthetischen seismischen Datensatz zu erzeugen, wobei der seismische Felddatensatz und der verarbeitete seismische Synthesedatensatz jeweils Ausgabebilder umfassen und Attributverzerrungen aufgrund der seismischen Verarbeitung enthalten, wobei der verarbeitete synthetische seismische Datensatz synthetische Bildreaktionen einzelner Schichtgrenzen des Erdmodells umfasst, die einzeln berechnet werden, frei von Interferenz durch Bildartefakte anderer Schichtgrenzen;
   c. Extrahieren, an dem einen oder den mehreren Computerprozessoren, der Position, Phase und Amplitude aus der synthetischen Bildreaktion jeder der einzelnen Schichtgrenzen; und
   d. Korrigieren (16), über den einen oder die mehreren Computerprozessoren, der Attributverzerrung in dem seismischen Felddatensatz basierend auf der Verzerrung, die aus dem verarbeiteten synthetischen seismischen Datensatz bewertet wird, unter Verwendung von Abweichungen in der extrahierten Position, Phase und Amplitude in den synthetischen Bildreaktionen und der erwarteten Position, Phase und Amplitude aus dem Erdmodell, um einen korrigierten verarbeiteten Felddatensatz zu erzeugen,

   und wobei:
   der seismische Felddatensatz mehrere Spuren beinhaltet, die an mehreren seismischen Sensoren für jeden einer Vielzahl von seismischen Schüssen aufgezeichnet sind.

2. Verfahren (100) nach Anspruch 1, wobei die seismische Verarbeitung Migration ist.

3. Verfahren (100) nach Anspruch 1, wobei die seismische Verarbeitung eine Datenkonditionierung nach der Migration ist.

4.  Verfahren (100) nach Anspruch 2, wobei das Erdmodell mit einem Satz von sich nicht schneidenden Schichten mit Dichtestörung entworfen ist, um einen Dip-Inhalt des Erdmodells darzustellen, und mit einer Erfassungsgeometrie, die repräsentativ für die seismischen Felddaten ist.

5.  Verfahren (100) nach Anspruch 4, wobei die Vorwärtsmodellierung eine Finite-Differenzen-Modellierung ist.

6.  Computersystem (500), das Folgendes umfasst:

    einen oder mehrere Prozessoren (502); und
    einen Speicher (506),
    wobei ein oder mehrere Programme in dem Speicher (506) gespeichert und dazu ausgelegt sind, durch den einen oder die mehreren Prozessoren (502) ausgeführt zu werden, wobei das eine oder die mehreren Programme Anweisungen beinhalten, die bei Ausführung durch den einen oder die mehreren Prozessoren (502) bewirken, dass das System (500) das Verfahren nach einem der Ansprüche 1 bis 5 ausführt.

7.  Ein oder mehrere Computerprogramme, die Anweisungen umfassen, die bei Ausführung durch eine elektronische Vorrichtung (500) mit einem oder mehreren Prozessoren (502) und einem Speicher (506) bewirken, dass die Vorrichtung (500) das Verfahren nach einem der Ansprüche 1 bis 5 ausführt.

8.  Nichtflüchtiges computerlesbares Datenspeichermedium (506), auf dem das eine oder die mehreren Computerprogramme nach Anspruch 7 gespeichert sind.

**Revendications**

1.  Procédé mis en œuvre par ordinateur (100) d'imagerie sismique, comprenant :

    a. la réception (10, 11), à un ou plusieurs processeurs d'ordinateur, d'un ensemble de données sismiques de terrain, représentatives d'un volume souterrain d'intérêt, et d'un ensemble de données sismiques synthétiques, dans lequel l'ensemble de données sismiques synthétiques est généré avec une variation d'attribut connue, ou sans variation d'attribut, avec angle ou d'autres coordonnées spatiales, dans lequel l'ensemble de données sismiques synthétiques inclut des données sismiques synthétiques générées par modélisation prospective à travers un modèle terrestre ayant des limites de couches ;
    b. l'application (12, 13), par l'intermédiaire de l'un ou des plusieurs processeurs d'ordinateur, d'un traitement sismique à l'ensemble de données sismiques de terrain et à l'ensemble de données sismiques synthétiques, pour générer un ensemble traité de données sismiques de terrain et un ensemble traité de données sismiques synthétiques, dans lequel l'ensemble traité de données sismiques de terrain et l'ensemble traité de données sismiques synthétiques comprennent chacun des images de sortie et contiennent une distorsion d'attribut due au traitement sismique, dans lequel l'ensemble traité de données sismiques synthétiques comprend des réponses d'images synthétiques de limites de couches individuelles du modèle terrestre calculées individuellement, sans interférence par artefacts d'images d'autres limites de couches ;
    c. l'extraction, à l'un ou aux plusieurs processeurs d'ordinateur, de la position, de la phase, et de l'amplitude, de la réponse d'image synthétique de chacune des limites de couches individuelles ; et
    d. la correction (16), par l'intermédiaire de l'un ou des plusieurs processeurs d'ordinateur, de la distorsion d'attribut dans l'ensemble de données sismiques de terrain sur la base de la distorsion évaluée de l'ensemble traité de données sismiques synthétiques en utilisant des déviations de la position, de la phase, et de l'amplitude, extraites dans les réponses d'images synthétiques, et la position, la phase, et l'amplitude attendues du modèle terrestre, pour générer un ensemble traité corrigé de données de terrain,

    et dans lequel :
    l'ensemble de données sismiques de terrain inclut une pluralité de traces enregistrées à une pluralité de capteurs sismiques pour chacun d'une pluralité de prises de vue sismiques.

2.  Procédé (100) de la revendication 1, dans lequel le traitement sismique est la migration.

3.  Procédé (100) de la revendication 1, dans lequel le traitement sismique est le conditionnement de données post-migration.

**4.** Procédé (100) de la revendication 2, dans lequel le modèle terrestre est conçu avec un ensemble de couches sans intersection, avec une perturbation de densité pour représenter un contenu de pendage du modèle terrestre et avec une géométrie d'acquisition représentative des données sismiques de terrain.

**5.** Procédé (100) de la revendication 4, dans lequel la modélisation prospective est une modélisation à différences finies.

**6.** Système d'ordinateur (500), comprenant :

un ou plusieurs processeurs (502) ; et
une mémoire (506) ;
dans lequel un ou plusieurs programmes sont stockés dans la mémoire (506) et configurés pour être exécutés par l'un ou les plusieurs processeurs (502), l'un ou les plusieurs programmes incluant des instructions qui, lorsqu'elles sont exécutées par l'un ou les plusieurs processeurs (502), amènent le système (500) à effectuer le procédé de quelconques des revendications 1 à 5.

**7.** Programme ou programmes d'ordinateur comprenant des instructions, qui, lorsqu'elles sont exécutées par un dispositif électronique (500) avec un ou plusieurs processeurs (502) et une mémoire (506), amènent le dispositif (500) à effectuer le procédé de quelconques des revendications 1 à 5.

**8.** Support de stockage de données non transitoire lisible par ordinateur (506) ayant, stockés sur celui-ci, l'un ou les plusieurs programmes d'ordinateur de la revendication 7.

FIG. 1

# More Realistic Models -- Density $\Delta\rho/\rho$ Perturbation Layers

FIG. 2

MBAR Synth CIG   MBAR Synth Amp CIG   Field Data CIG before MBAR   Field Data CIG after MBAR

FIG. 3

Amplitude artifacts due to uneven fold as a result of merging of multiple surveys

Before MBAR

After MBAR

FIG. 4

FIG. 5

60 Input  61 Mute  62 Stretch  63 RMO  64 Scale  65 Denoise  66 MBAR  67 Output

Input to design matching filter for MBAR

Synth amp before denoise

Synth amp distorted by denoise

Synth amp recovered by MBAR

64S  65S  66S

FIG. 6

EP 4 107 550 B1

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018275302 A1
- US 5623928 A
- US 2019187312 A1
- WO 2019241062 A1